# EUROPEAN PATENT APPLICATION

(11) **EP 1 168 775 A2**
(43) Date of publication of application: **02.01.2002**
(21) Application number: 01305078.6
(22) Date of filing: 11.06.2001
(51) Int. Cl.: H04M 1/02, H04M 1/57

(54) **A communications device**

(30) Priority: 30.06.2000 GB 0016156
(71) Applicant: NOKIA MOBILE PHONES LTD., 02150 Espoo (FI)
(72) Inventor: Ruck, Shaun, Rickmansworth, Hertfordshire WD3 2LE (GB)
(74) Representative: Read, Matthew Charles

(57) **Abstract**

A mobile telephone comprises a plurality of differently coloured light emitting diodes (18) to illuminate a liquid crystal display (5) and a keypad (8) according to the identity of a party signalling the telephone.

## Description

The present invention relates to a communications device.

Mobile telephone handsets are known, which notify a user of an incoming call or message by ringing and indicating the identity of the caller on a liquid crystal display (LCD).

It is also known to personalise the ringing tone or tune in dependence upon the identity of the caller. The mobile telephone handset stores in memory or on a smart card contact names and telephone numbers, which the user can arrange into caller groups and assign distinctive ringing tones to each caller group. However, this is of little help if the user is unable to hear the ringing tone. On the one hand, the user may have turned off the ringer so as to prevent interruption during a meeting or a visit to the theatre. On the other hand, the user may be in a noisy environment, which prevents the user from distinguishing between different ringing tones. Alternatively, although the user may be able to hear the ringing tone, the user may have difficulty remembering which ringing tone they assigned to each caller group. Of course the user could identify the caller by looking at the LCD, however there may be circumstances when the user is unable to do this, for example if the user has poor eyesight or is driving a car.

The present invention seeks to provide improved caller group identification.

According to the present invention there is provided a communications device comprising a plurality of differently coloured light emitters and a controller to control operation of the light emitting means in dependence upon the identity of a party signalling the device.

The device may further comprise a sound emitter and said controller may further control operation of the sound emitter in dependence upon the identity of the signalling party.

The device may further comprise memory to store an identity of a party, which may be the identity of the signalling party. The identity may be stored as a network number and as a label. The identity of said party, including said signalling party, may be assigned to one of a plurality of party groups.

The controller may be configured to operate the light emitters in dependence upon the said one of the plurality of party groups and may include family, very important person, friend and colleague classes. The assignment of each of the identities of the parties may be user-defined.

The controller may cause one of said light emitters to be illuminated when said signalling party signals the device, for example to flash or to flash repetitively.

According to the present invention there is also provided a method of operating a communications device, the method comprising providing a plurality of differently coloured light emitters and controlling operation of the light emitters in dependence upon the identity of a party signalling the device.

An embodiment of the present invention will now be described, by way of example, with reference to accompanying drawings, in which:
Figure 1 is an exploded view of a mobile telephone according to the invention;
Figure 2 is a schematic diagram of the circuits of the mobile telephone;
Figure 3 is a plan view of a flexible substrate forming part of the mobile telephone circuits;
Figure 4 is a process flow diagram for making entries in an address book;
Figure 5 is a process flow diagram for nominating members of a caller group;
Figure 6 is a process flow diagram for selecting a ringing tone for a caller group;
Figure 7 is a process flow diagram for selecting a LED colour scheme for a caller group;
Figure 8 is a process flow diagram for selecting vibration call notification and

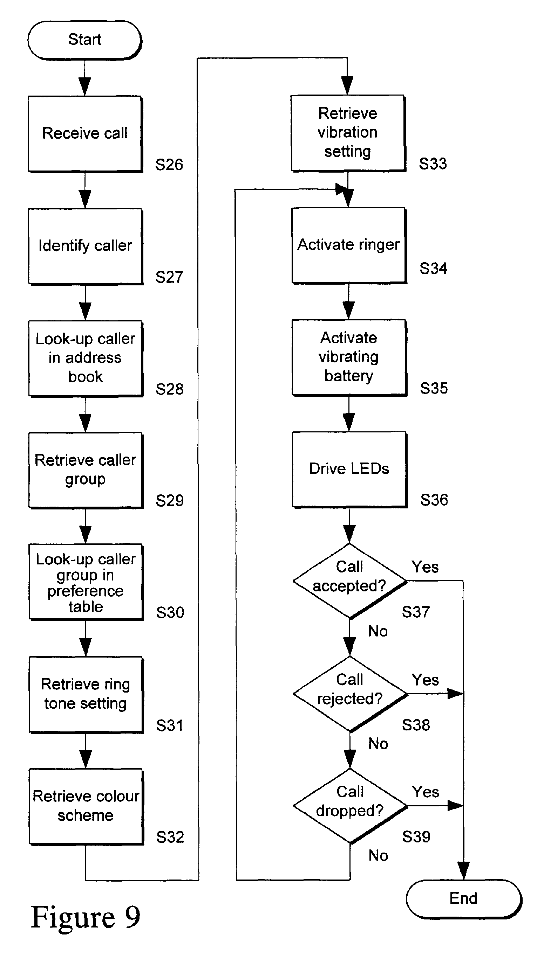

Figure 9 is a process flow diagram for notifying a user of an incoming call.

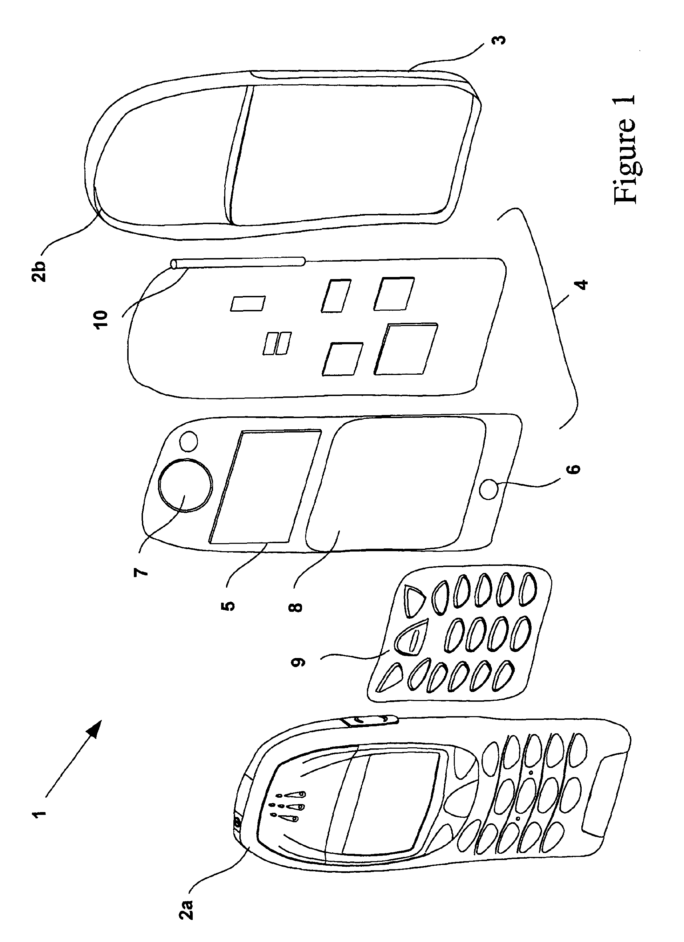

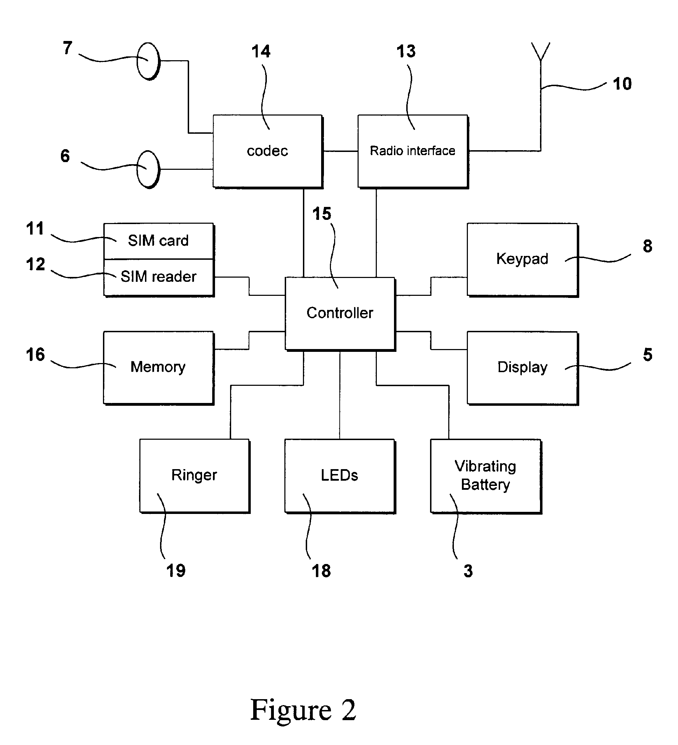

Referring to Figures 1 and 2, a mobile telephone 1 comprises front and back covers 2a, 2b, a vibrating battery pack 3, mobile telephone circuitry 4, an LCD panel 5, microphone 6, ear-piece 7, keypad membrane 8, keypad 9, antenna 10, subscriber identification module (SIM) card 11 and SIM card reader 12. The telephone circuitry 4 includes radio interface circuitry 13, codec circuitry 14, controller 15 and memory 16. Individual circuits and elements are of a type well known in the art, for example in the Nokia range of mobile telephones. It will be appreciated by those skilled in the art that the vibrating battery 3 may be replaced with a conventional non-vibrating battery and a dedicated vibrating unit.

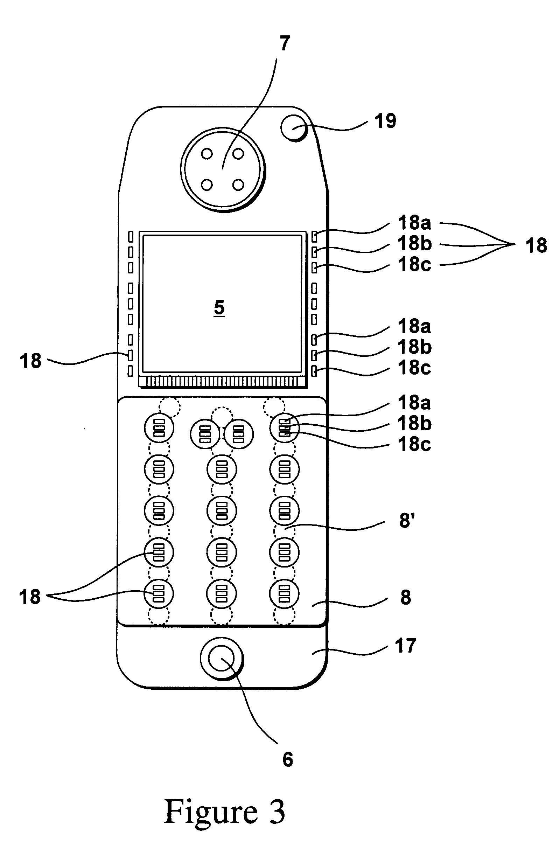

Referring to also to Figure 3, a flexible substrate 17 carries the LCD panel 5, the microphone 6, the earpiece 7, the keypad membrane 8 having a plurality of keypad sensors 8', a plurality of sets of light emitting diodes (LEDs) 18 and a ringer 19. Each set of LEDs 18 comprises red, amber and green LEDs 18a, 18b, 18c. Three sets of LEDs 18 are arranged along each of the short edges of the LCD panel 5 and sixteen sets of LEDs 18 are arranged between the keypad sensors 8'.

Personalisation of the mobile telephone 1 by a user called Peter will now be described.

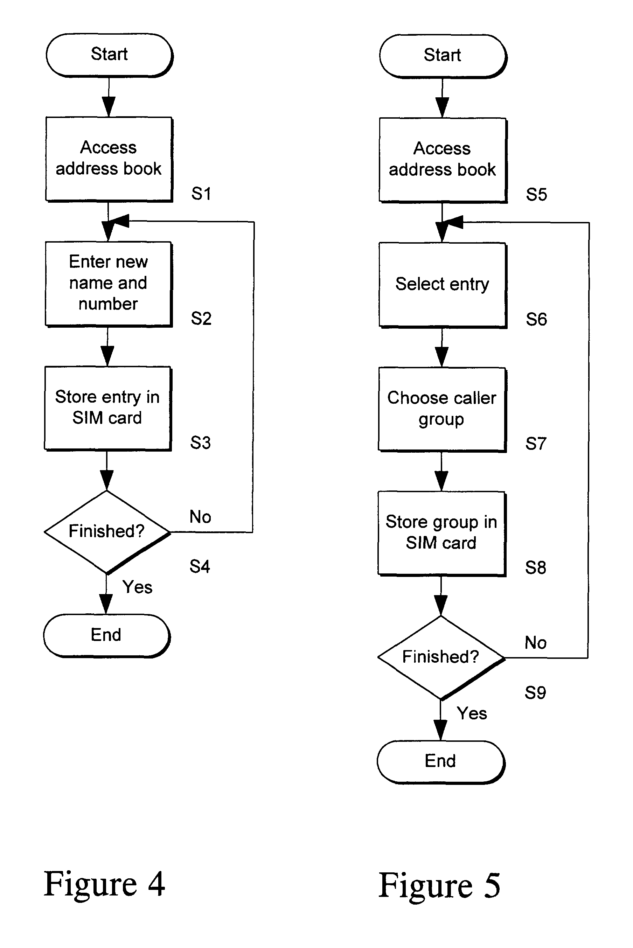

Referring to Figure 4, Peter configures the mobile telephone 1 by entering names and telephone numbers in an address book stored in memory on the SIM card 11. Peter accesses the address book from a main menu (step S1) and enters a name and telephone number, for example "Mum" and +44 20 8123 4567 respectively (step S2). Peter confirms that the entry is to be stored (step S3) and indicates that he wishes to make more entries (step S4). He makes further entries, one for a colleague from work, entered as "John", and Peter's bank manager, entered as "Bank Manager" having telephone numbers +44 20 7654 3210 and +44 20 8999 0000 respectively.

Referring to Figure 5, Peter may arrange some or all the entries into caller groups by selecting an entry in the address book and flagging the entry as a member of a caller group, which may include Friends, Very Important Persons (VIPs), Family, Colleagues and Others. Peter accesses the address book (step S5), scrolls through the address book until he finds "Mum" (step S6), indicates that he wishes "Mum" to belong to a caller group and selects caller group "Family" (step S7). Peter confirms this selection (step S8) and indicates that he wishes to make further caller group selections (step S9). Similarly, Peter finds the entry "John" and selects caller group "Colleagues". Likewise, he finds the entry "Bank Manager" and selects caller group "VIPs".

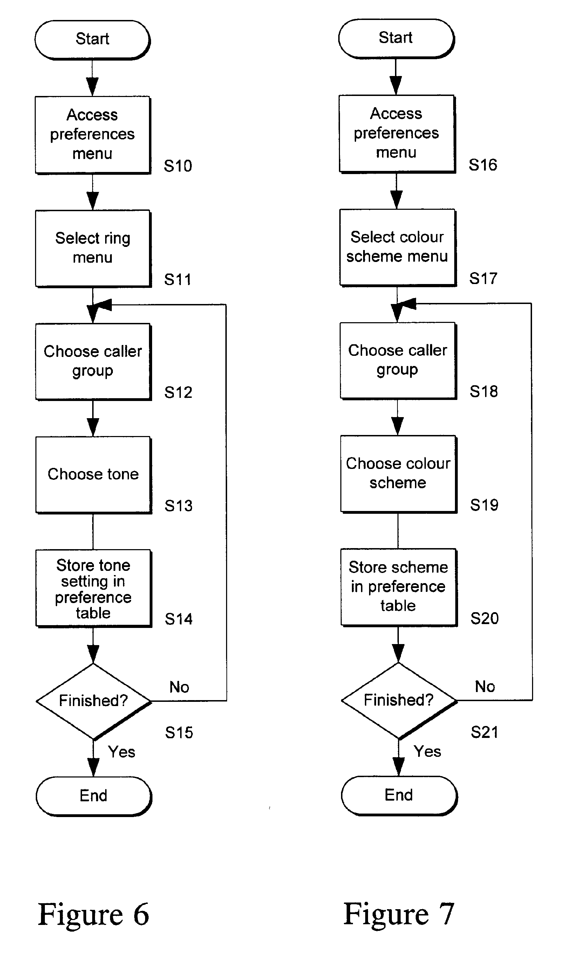

Referring to Figure 6, Peter configures the ring of the mobile telephone 1 according to caller group by accessing a preference menu, selecting a caller group and choosing a caller group ringing tone or tune. Peter accesses a preference menu (step S10), from which he selects ringing tone menu (step S11). Peter selects the caller group "Family" (step S12) and chooses a tuneful minuet as a ringing tone (step S13). He confirms this selection and the ringing tone setting is stored in a preference table held in memory 16 (step S14). Peter indicates that he wishes to make further ringing tone selections (step S15). Similarly, he selects the caller group "Colleagues" and picks a bicycle bell ring as an alerting tone. In the same way, Peter selects the caller group "VIP" and chooses a high-pitched trill as a ring.

Referring to Figure 7, Peter configures the illumination of the mobile telephone 1 when a call is received according to caller group by accessing the preference menu, selecting a caller group and choosing a caller group colour scheme. Peter accesses the preference menu (step S16) from which he selects a call notification colour scheme menu (step S17). He selects the caller group "Family" (step S18) and picks continuous green illumination (step S19). He confirms this selection and the colour scheme setting is stored in the preference table held in memory 16 (step S20). Peter indicates that he wishes to make further colour scheme selections (step S21). In a similar fashion, Peter selects the caller group "Colleagues" and decides upon slow, steady amber pulses. Finally, he selects the caller group "VIP" and chooses irregular, rapidly flashing red pulses.

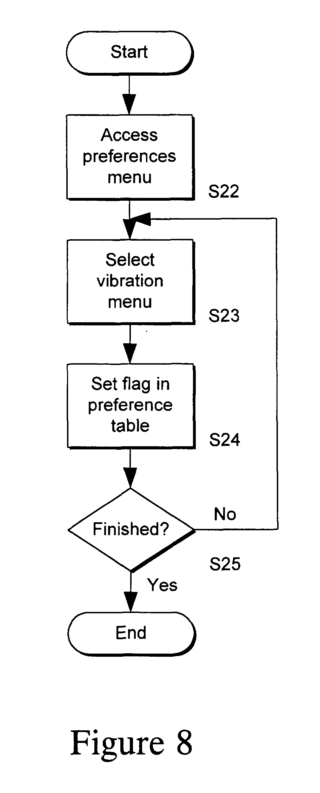

Referring to Figure 8, Peter also configures the vibrating battery 3 to vibrate when any call is received. He accesses the preference menu (step S22), from which he chooses the vibration menu (step S23). Peter sets the battery 3 to vibrate when a call is received (step S24) and exits the menu (step S25).

Operation of the mobile telephone 1 will now be described.

John calls Peter from work on the mobile telephone 1 (step S26). The identity of the caller is signalled to the mobile telephone 1 during establishment of the call in a manner well known in the art (step S27). The controller 15 looks-up John in the address book stored in the SIM card 11 (step S28) and identifies to which caller group John belongs (step S29). Having determined that John belongs to caller group "Colleagues", the controller 15 looks-up the corresponding entry in the preference table stored in memory 16 (step S30) and retrieves the user-defined ringing tone (step S31), colour scheme (step S32) and the vibration option (step S33). The controller 15 operates the ringer 19, which emits a bicycle bell ring (step S34). The controller 15 causes the vibrating battery 3 to vibrate (step S35). The controller 15 drives the amber LEDs 18b in each set of LEDs 18 (step S36). It will be appreciated that John's identity may also be displayed on the LCD 5. Ringing of the ringer 19, vibration of the battery 3 and pulsation of the amber LEDs 18b continues until Peter accepts the call (step S37), by pressing an answer button on the keypad 8 or if he rejects the call by pressing a finish key (step S37) or if John gives up trying to contact Peter (step S38).

If Peter is travelling home from work on a noisy train and he keeps the mobile telephone 1 in his jacket pocket, he may not be able to hear the telephone 1 ring. However, he will feel the battery 3 vibrate indicating that a calling party is signalling. As Peter searches for the telephone 1, he will see that the keypad 8 and the LCD panel 5 are flashing amber, informing him that someone from work is contacting him.

It will be appreciated that while the invention has been described in relation to mobile telephones, it can be used with any sort of portable electronic apparatus, for example, hand held computers and portable measuring equipment.

It will be appreciated that many modifications may be made to the embodiment described above.

For example, different numbers of diodes may be used in each set of LEDs, for example two, four, five or six. Different colour LEDs may be used instead of red, green or amber, including blue. LEDs in a set may be combined into a single, tuneable LED. Different combinations of alerting illumination may be used including pulses of different duration and separation and combination of more than one LED in a set.

Illumination of the screen and the keypad may be different. Illumination of each set of LEDs may be sequenced, thus allowing patterns to be traced. The LEDs may be located on the front or back cover of the mobile telephone.

Other light emitters may be used.

The signal may indicate the receipt of a message rather than receipt of a call.

## Claims

1. A communications device comprising:
a plurality of differently coloured light emitters (18) and
a controller (15) to control operation of the light emitters in dependence upon the identity of a party signalling the device.

2. A device according to claim 1, wherein the device further comprises a sound emitter.

3. A device according to claim 2, wherein said controller further controls operation of the sound emitter in dependence upon the identity of the signalling party.

4. A device according to any preceding claim further comprising memory to store an identity of a party.

5. A device according to claim 4, wherein the identity of said party is stored as a network number.

6. A device according either claim 4 or 5, wherein the identity of said party is stored as a label.

7. A device according to any one of claims 4 to 6, wherein the identity of said party is assigned to one of a plurality of party groups.

8. A device according to claim 7, wherein the identity of the signalling party is stored in the memory.

9. A device according to claim 8, wherein the identity of the signalling party is assigned to one of the plurality of party groups.

10. A device according to claim 9, wherein the controller is configured to operate the light emitter in dependence upon the said one of the plurality of party groups.

11. A device according to any one of claims 7 to 10, wherein the plurality of party groups includes a family class.

12. A device according to any one of claims 7 to 11, wherein the plurality of party groups includes a very important person class.

13. A device according to any one of claims 7 to 12, wherein the plurality of party groups includes a friend class.

14. A device according to any one of claims 7 to 13, wherein the plurality of party groups includes a colleague class.

15. A device according to any one of claims 7 to 14, wherein the assignment of each of the identities of the parties is user-defined.

16. A device according to any preceding claim, wherein the controller causes one of said light emitters to be illuminated when said signalling party signals the device.

17. A device according to claim 16, wherein the controller is configured to cause said one of said light emitters to flash.

18. A device according to claim 16, wherein the controller is configured to cause said one of said light emitters to flash repetitively.

19. A method of operating a communications device, the method comprising:
providing a plurality of differently coloured light emitters and
controlling operation of the light emitter in dependence upon the identity of a party signalling the device.
